# EUROPEAN PATENT SPECIFICATION

(11) **EP 4 012 682 B1**
(45) Date of publication and mention of the grant of the patent: **17.01.2024**
(21) Application number: 20869553.6
(22) Date of filing: 24.09.2020
(51) Int. Cl.: G08G 1/16, B62J 45/40, B62J 45/415, B62J 99/00, B62J 27/00, B62L 3/08, G08G 1/01, G08G 1/017, G08G 1/04, B60W 10/18, B60W 10/20, B60W 30/09, B60W 50/14

(54) **LEANING VEHICLE COMPRISING FCW CONTROL DEVICE**
REINIGUNGSFAHRZEUG MIT FCW-STEUERVORRICHTUNG
VÉHICULE À INCLINAISON COMPRENANT UN DISPOSITIF DE COMMANDE FCW

(30) Priority: 26.09.2019 JP 2019175786
(43) Date of publication of application: 15.06.2022
(73) Proprietor: YAMAHA HATSUDOKI KABUSHIKI KAISHA, Iwata-shi Shizuoka 438-8501 (JP)
(72) Inventor: KOBAYASHI, Hiroshi, Iwata-shi, Shizuoka 438-8501 (JP); SHINAGAWA, Akinori, Iwata-shi, Shizuoka 438-8501 (JP); ONOUE, Taro, Iwata-shi, Shizuoka 438-8501 (JP)
(74) Representative: Stöckeler, Ferdinand
(86) International application number: PCT/JP2020/035975
(87) International publication number: WO 2021/060357

(56) References cited:
- EP-A1- 3 335 954
- WO-A1-2016/021607
- WO-A1-2018/003926
- WO-A1-2018/216308
- WO-A1-2018/229567
- JP-A- 2016 034 819
- JP-A- 2018 197 071
- US-A1- 2012 119 894
- US-A1- 2016 104 380
- US-A1- 2017 144 665
- US-A1- 2017 162 053
- US-A1- 2019 139 329

## Description

### [Technical Field]

The present teaching relates to a leaning vehicle including an FCW control device which is mounted on a leaning vehicle body frame leaning rightward in a vehicle left-right direction when turning right and leaning leftward in the vehicle left-right direction when turning left and is configured to output an FCW based on a margin obtained based on the relationship between an obstacle and the leaning vehicle. FCW is an abbreviation of Forward Collision Warning.

### [Background Art]

A leaning vehicle including an FCW control device configured to output an FCW based on a margin obtained based on the relationship between an obstacle and the leaning vehicle has been proposed. The leaning vehicle is a vehicle which includes a leaning vehicle body frame which leans rightward in the vehicle left-right direction when turning right and leans leftward in the vehicle left-right direction when turning left. The leaning vehicle is, for example, a motorcycle.

For example, an FCW control device of a leaning vehicle recited in Patent Literature 1 is mounted on a leaning vehicle body frame which leans rightward in the vehicle left-right direction when turning right and leans leftward in the vehicle left-right direction when turning left. The FCW control device of Patent Literature 1 sets a zone at a location ahead of the leaning vehicle, based on the relationship between an obstacle and the leaning vehicle. The FCW control device of Patent Literature 1 outputs the FCW when the leaning vehicle is in the zone.

US 2017/144665 A1 discloses a saddled vehicle driven by a driver and including a detection device and a cruise control device for judging other vehicles detected by the detection device and traveling in a same traffic lane as the own vehicle's traffic lane as a preceding vehicle. Travel of the vehicle driven by the driver is automatically controlled so that the vehicle driven by the driver follows the preceding vehicle and keeps a preset intervehicular distance relative to the preceding vehicle. The cruise control device can obtain a forward intervehicular distance which is a distance from the vehicle driven by the driver to the preceding vehicle in a traveling direction and a side intervehicular distance which is a distance from the vehicle driven by the driver to the preceding vehicle in a vehicle width direction and can perform the automatic travel control of the vehicle driven by the driver in accordance with the forward intervehicular distance and the side intervehicular distance.

### [Citation List]

### [Patent Literatures]

[Patent Literature 1] Japanese Unexamined Patent Publication No. 2009-116882

### [Summary]

### [Technical Problem]

The leaning vehicle with the FCW control device disclosed in Patent Literature 1 is required to have a higher degree of freedom in designing the hardware resource of the FCW control device.

An object of the present teaching is to provide a leaning vehicle with an FCW control device, in which the degree of freedom in designing the hardware resource such as a processor and a memory of the FCW control device can be improved.

### [Solution to Problem]

A leaning vehicle including an FCW control device of an embodiment of the present teaching has the following structures. The leaning vehicle includes an FCW control device which is mounted on a leaning vehicle body frame which leans rightward in a vehicle left-right direction when turning right and leans leftward in the vehicle left-right direction when turning left, the FCW control device being configured to output an FCW based on a margin acquired based on relationship between an obstacle and the leaning vehicle. The margin acquired based on relationship between an obstacle and the leaning vehicle is a margin when a rider deals with the obstacle. The leaning vehicle comprises at least one of a front sensor configured to detect an object ahead of the leaning vehicle or a vehicle-to-vehicle communication apparatus configured to receive, from another vehicle, a signal related to location information of the other vehicle. The FCW control device is configured to acquire the margin based on the relationship between the obstacle and the leaning vehicle, with reference to information acquired by at least one of the front sensor or the vehicle-to-vehicle communication apparatus. The FCW control device is configured to perform control to establish a relationship 1, and at least one of a relationship 2 or a relationship 3:
the relationship 1: when the leaning vehicle linearly runs at a first vehicle speed, one automobile exists ahead of the leaning vehicle and is located on a linear line passing through the center in a vehicle width direction of the leaning vehicle, and there is no obstacle except the automobile, the FCW control device outputs the FCW based on the margin acquired based on the relationship between the automobile and the leaning vehicle;
the relationship 2: when the leaning vehicle linearly runs at the first vehicle speed and one motorcycle exists ahead of the leaning vehicle and is located on the linear line passing through the center in the vehicle width direction of the leaning vehicle, the FCW control device does not output the FCW irrespective of the distance between the motorcycle and the leaning vehicle in the traveling direction of the leaning vehicle; and
the relationship 3: when the leaning vehicle linearly runs at the first vehicle speed and plural motorcycles exist ahead of the leaning vehicle so that the distance between each of the plural motorcycles and the leaning vehicle in the vehicle width direction of the leaning vehicle is equal to a first distance that is longer than zero and shorter than a half of the vehicle width of the leaning vehicle, the FCW control device does not output the FCW irrespective of the distance between each of the plural motorcycles and the leaning vehicle in the traveling direction of the leaning vehicle.

A leaning vehicle including an FCW control device of an embodiment of the present teaching may have the following structure. The FCW control device is configured to perform control to establish the relationship 3 and a relationship 4:
the relationship 4: when the leaning vehicle linearly runs at the first vehicle speed, plural motorcycles exist ahead of the leaning vehicle so that the distance between each of the plural motorcycles and the leaning vehicle in the vehicle width direction of the leaning vehicle is equal to the first distance, and there is no obstacle except the plural motorcycles, the FCW control device does not output the FCW irrespective of the distance between each of the plural motorcycles and the leaning vehicle in the traveling direction of the leaning vehicle.

A leaning vehicle including an FCW control device of an embodiment of the present teaching may have the following structure. The FCW control device is configured to perform control to establish the relationship 3 and a relationship 5:
the relationship 5: when the leaning vehicle linearly runs at the first vehicle speed, one automobile exists on the linear line passing through the center in the vehicle width direction of the leaning vehicle, plural motorcycles exist behind the automobile and ahead of the leaning vehicle so that the distance between each of the plural motorcycles and the leaning vehicle in the vehicle width direction of the leaning vehicle is equal to the first distance, and there is no obstacle except the automobile and the plural motorcycles, the FCW control device does not output the FCW irrespective of the distance between the automobile and the leaning vehicle in the traveling direction of the leaning vehicle.

A leaning vehicle including an FCW control device of an embodiment of the present teaching may have the following structure. The FCW control device is configured to perform control to establish the relationship 3 and a relationship 6:
the relationship 6: when the leaning vehicle linearly runs at the first vehicle speed, one automobile exists on the linear line that passes through the center in the vehicle width direction of the leaning vehicle, one motorcycle exists behind the automobile and ahead of the leaning vehicle so that the distance between the motorcycle and the leaning vehicle in the vehicle width direction of the leaning vehicle is equal to the first distance, and there is no obstacle except the automobile and the motorcycle, the FCW control device outputs the FCW based on the margin acquired based on the relationship between the automobile and the leaning vehicle.

A leaning vehicle including an FCW control device of an embodiment of the present teaching may have the following structure. The leaning vehicle includes at least one of a front sensor configured to detect an object ahead of the leaning vehicle or a vehicle-to-vehicle communication apparatus configured to receive, from another vehicle, a signal related to location information of the other vehicle, the FCW control device being configured to acquire the relationship between the object ahead of the leaning vehicle and the leaning vehicle and the margin based on the relationship between the obstacle and the leaning vehicle, with reference to information acquired by at least one of the front sensor or the vehicle-to-vehicle communication apparatus.

A leaning vehicle including an FCW control device of an embodiment of the present teaching may have the following structure. While the leaning vehicle is turning, the FCW control device is configured not to output the FCW no matter whether there is the obstacle.

A leaning vehicle including an FCW control device of an embodiment of the present teaching may have the following structure. While the leaning vehicle is running at vehicle speed equal to or lower than a second vehicle speed that is lower than the first vehicle speed, the FCW control device is configured not to output the FCW no matter whether there is the obstacle.

A leaning vehicle including an FCW control device of an embodiment of the present teaching may have the following structure. The FCW control device is configured to perform control to establish a relationship 7:
the relationship 7: when the leaning vehicle linearly runs at the first vehicle speed and plural motorcycles exist ahead of the leaning vehicle so that the distance between the linear line passing through the center in the vehicle width direction of the leaning vehicle and each of the motorcycles in the vehicle width direction of the leaning vehicle is equal to a second distance that is longer than zero and shorter than a half of the vehicle width of the leaning vehicle, the FCW control device does not output the FCW irrespective of the distance between each of the plural motorcycles and the leaning vehicle in the traveling direction of the leaning vehicle.

A leaning vehicle including an FCW control device of an embodiment of the present teaching may have the following structure. The FCW control device is configured to perform control to establish a relationship 8:
the relationship 8: when the leaning vehicle linearly runs at the first vehicle speed, plural motorcycles exist ahead of the leaning vehicle so that the distance between the linear line passing through the center in the vehicle width direction of the leaning vehicle and each of the plural motorcycles in the vehicle width direction of the leaning vehicle is equal to the second distance, and there is no obstacle except the plural motorcycles, the FCW control device does not output the FCW irrespective of the distance between each of the plural motorcycles and the leaning vehicle in the traveling direction of the leaning vehicle.

A leaning vehicle including an FCW control device of an embodiment of the present teaching may have the following structure. The FCW control device is configured to perform control to establish a relationship 9:
the relationship 9: when the leaning vehicle linearly runs at the first vehicle speed, one automobile exists on the linear line passing through the center in the vehicle width direction of the leaning vehicle, plural motorcycles exist behind the automobile and ahead of the leaning vehicle so that the distance between the linear line passing through the center in the vehicle width direction of the leaning vehicle and each of the motorcycles in the vehicle width direction of the leaning vehicle is equal to the second distance, and there is no obstacle except the automobile and the plural motorcycles, the FCW control device does not output the FCW irrespective of the distance between the automobile and the leaning vehicle in the traveling direction of the leaning vehicle.

A leaning vehicle including an FCW control device of an embodiment of the present teaching may have the following structure. The FCW control device is configured to perform control to establish a relationship 10:
the relationship 10: when the leaning vehicle linearly runs at the first vehicle speed, one automobile exists on the linear line that passes through the center in the vehicle width direction of the leaning vehicle, one motorcycle exists behind the automobile and ahead of the leaning vehicle so that the distance between the linear line passing through the center in the vehicle width direction of the leaning vehicle and the motorcycle in the vehicle width direction of the leaning vehicle is equal to the second distance, and there is no obstacle except the automobile and the motorcycle, the FCW control device outputs the FCW based on the margin acquired based on the relationship between the automobile and the leaning vehicle.

A leaning vehicle including an FCW control device of an embodiment of the present teaching may have the following structure. The FCW control device is configured to perform control to establish a relationship 11:
the relationship 11: when the leaning vehicle linearly runs at the first vehicle speed, one automobile exists on the linear line passing through the center in the vehicle width direction of the leaning vehicle, one motorcycle exists behind the automobile and ahead of the leaning vehicle so that the distance between the linear line passing through the center in the vehicle width direction of the leaning vehicle and the motorcycle in the vehicle width direction of the leaning vehicle is equal to the second distance, and there is no obstacle except the automobile and the motorcycle, the FCW control device does not output the FCW irrespective of the distance between the automobile and the leaning vehicle in the traveling direction of the leaning vehicle.

### [Advantageous Effects]

Leaning vehicles such as motorcycles are short in vehicle width (size in the vehicle left-right direction) as compared to non-leaning vehicles such as automobiles. On this account, a rider of a leaning vehicle is allowed to select a position where the leaning vehicle runs within a single lane. In other words, the degree of freedom in the running position within one lane is higher in leaning vehicles than in non-leaning vehicles such as automobiles. Leaning vehicles are therefore able to run within the lane in a tightly gathered manner. An expression "leaning vehicles run in a tightly gathered manner" indicates that three or more leaning vehicles run in a tightly gathered manner. A situation in which plural motorcycles exist ahead of a host vehicle and the distance between each of the plural motorcycles and the host vehicle in the vehicle width direction of the host vehicle is longer than zero and shorter than a half of the vehicle width of the host vehicle, e.g., the relationship 3, is a situation in which leaning vehicles including the host vehicle are running in a tightly gathered manner.

Because a leaning vehicle running behind a preceding leaning vehicle has a high degree of freedom in running position, the leaning vehicle is allowed to run at a position that is not right behind the preceding leaning vehicle but obliquely rearward of the preceding leaning vehicle. A rider of a leaning vehicle tends to run at a position obliquely rearward of a preceding leaning vehicle in consideration of a possibility of overtaking the preceding leaning vehicle. When leaning vehicles run in a tightly gathered manner, the degree of freedom in the choice of the running position is low. On this account, when leaning vehicles run in a tightly gathered manner, each leaning vehicle tends to run at a position right behind another leaning vehicle. In other words, when a leaning vehicle having a high degree of freedom in the running position intentionally runs right behind another leaning vehicle, the leaning vehicles are highly likely to run in a tightly gathered manner. For this reason, a situation in which one motorcycle exists ahead of a host vehicle and on a linear line passing through the center in the vehicle width direction of the host vehicle, e.g., the relationship 2, is highly likely a situation in which leaning vehicles including the host vehicle are running in a tightly gathered manner.

The FCW control device outputs an FCW based on a margin acquired based on the relationship between an obstacle ahead of the host vehicle (leaning vehicle) and the host vehicle. When the FCW control device performs control to establish the relationship 3, the FCW control device does not output the FCW in a situation in which plural leaning vehicles are running in a tightly gathered manner. When the FCW control device performs control to establish the relationship 2, the FCW control device does not output the FCW in a situation in which plural leaning vehicles are highly likely to run in a tightly gathered manner. The FCW is output to notify the rider that the host vehicle is approaching the obstacle and an operation by the rider is needed. When leaning vehicles are running in a tightly gathered manner, a rider of a leaning vehicle that is not at the top of the group of the leaning vehicles is paying attention to the surroundings. Therefore, in the situation in which the leaning vehicles are running in the tightly gathered manner, the rider of the leaning vehicle that is not at the top of the group of the leaning vehicles does not need the output of the FCW

When leaning vehicles are running in a tightly gathered manner, the situation of surroundings of a leaning vehicle that is not at the top of the group of the leaning vehicles is complicated. It is therefore difficult to determine whether an operation by the rider of the leaning vehicle that is not at the top of the group is needed. In other words, it is difficult to determine whether to output the FCW. Even in a situation in which leaning vehicles are running in a tightly gathered manner, it is necessary to use a lot of types of data for the determination as in the FCW control device of Patent Literature 1 or to improve the detection accuracy of data used for the determination, in order to accurately determine whether an operation by the rider is needed. Therefore, because the FCW is not output when leaning vehicles are running in a tightly gathered manner or leaning vehicles are highly likely to run in a tightly gathered manner, it is possible to decrease the number of types of data used for determining whether to output the FCW and to decrease the detection accuracy of data used for determining whether to output the FCW. Therefore, it is possible to use hardware resource having a small processing capability or memory capacity. As a result, the degree of freedom in designing the hardware resource of the FCW control device can be improved.

### [Leaning Vehicle]

A leaning vehicle of the present teaching and the embodiments includes at least one front wheel and at least one rear wheel. The leaning vehicle may include two front wheels and one or two rear wheels. The leaning vehicle may include one front wheel and one or two rear wheels. In the leaning vehicle, either the front wheel or the rear wheel may be steered. The leaning vehicle of the present teaching and the embodiments includes a driving source. The driving source may be an engine, a motor driven by electricity, or a hybrid driving source including both an engine and a motor. A leaning vehicle body frame of the leaning vehicle is a member which mainly receives stress in the leaning vehicle. The leaning vehicle body frame may be a frame formed by combining a plurality of components, or may be an integrally-molded frame.

### [FCW Control Device]

In the present teaching and the embodiments, to output an FCW by the FCW control device indicates not to run a program of the FCW control device but to execute a process of giving a notification to a rider. When the FCW control device does not output an FCW, a process of giving a notification to a rider is not executed. When the FCW control device does not output an FCW, a program of the FCW control device may or may not run.

In the present teaching and the embodiments, a state in which the FCW control device does not output an FCW is not limited to those described in the present teaching and the embodiments. For example, the FCW control device may not output an FCW in a situation described below that is similar to a relationship 3 of the present teaching. The situation is such that a leaning vehicle (host vehicle) linearly runs at the first vehicle speed and plural motorcycles exist ahead of the leaning vehicle so that the distance between each motorcycle and the leaning vehicle is longer than zero and equal to or shorter than a first distance in the vehicle width direction of the leaning vehicle.

### [Notification Device]

The FCW control device of the present teaching and the embodiments is electrically connected to a notification device which is configured to give a notification to a rider. The FCW control device is configured to output an FCW by controlling the notification device. The notification device sends at least one of an auditory notification, a visual notification, a tactile notification, or an olfactory notification to a rider. The notification device may send a notification by combining at least two of a visual notification, an auditory notification, a tactile notification, and an olfactory notification. The auditory notification is a notification by sound. Sound for notification may be simple sound generated by an electromagnetic buzzer, melody, or artificial voice. The visual notification is a notification by light, for example. The tactile notification is a notification by vibration, for example. For example, a grip or a seat may vibrate. Means for generating vibration may be means dedicated to the notification device, a brake, or a drive source. The vibration may be a single motion, or may be successive or intermittent motions. The vibration may or may not be periodical.

### [Margin-Related Sensor]

The FCW control device of the present teaching and the embodiments is electrically connected to a margin-related sensor which is required to acquire a margin that is acquired based on the relationship between an obstacle and a leaning vehicle (host vehicle). The FCW control device acquires a margin based on the relationship between an obstacle and a leaning vehicle, with reference to information acquired by the margin-related sensor. The margin-related sensor may be at least one of a front sensor or a vehicle-to-vehicle communication apparatus. The front sensor is configured to detect an object ahead of the leaning vehicle (host vehicle). The front sensor is, for example, a camera taking images ahead of the leaning vehicle, a millimeter wave radar, a LIDAR, or a combination of these devices. The vehicle-to-vehicle communication apparatus is configured to receive, from another vehicle, a signal related to location information of the other vehicle.

### [Margin Acquired Based on Relationship between Obstacle and Leaning Vehicle]

In the present teaching and the embodiments, a margin acquired based on the relationship between an obstacle and a leaning vehicle is a margin when a rider deals with an obstacle. The margin is acquired based on the relative speed between an obstacle and a leaning vehicle, for example. The margin is information such as a numerical value and the strength of an analog signal. When the margin is higher than a reference value, there is a margin in comparison with the reference value. The reference value may be set in advance in accordance with each type of the leaning vehicles. The margin may be corrected or learned based on signals obtained by various types of sensors. The margin may be information directly indicating the margin or information indirectly indicating the margin such as information correlated with the margin. Acquisition of a margin indicates acquisition of information directly indicating the margin or acquisition of information indirectly indicating the margin.

### [Motorcycle or Automobile Exist on Linear Line]

In the present teaching and the embodiments, an expression "a motorcycle exists on a linear line" indicates that the motorcycle overlaps the linear line in plan view. A wheel of the motorcycle may or may not be on the linear line. In the present teaching and the embodiments, an expression "an automobile exists on a linear line" indicates that the automobile overlaps the linear line in plan view. A wheel of the automobile may or may not be on the linear line. An expression "exists on a linear line" can be replaced with "located on a linear line".

### [Motorcycle and Automobile]

The motorcycle of the present teaching and the embodiments encompasses a scooter, an engine-equipped bicycle, and a moped. The automobile of the present teaching and the embodiments encompasses a passenger vehicle and a large vehicle such as a bus and a truck.

### [Plural Motorcycles]

Plural motorcycles in the present teaching and the embodiments may exist to the right of and to the left of a linear line passing through the center in the vehicle's width direction of a leaning vehicle (host vehicle), may exist only to the right of the linear line, or may exist only to the left of the linear line.

The number of "plural motorcycles" in each of relationships 3 to 5 and relationships 7 to 9 of the present teaching and the embodiments may be 2 or more, 3 or more, or 4 or more. The number of "plural motorcycles" may be 2, 3, or 4, for example.

The numbers of "plural motorcycles" in the relationships 3 to 5 and the relationships 7 to 9 of the present teaching and the embodiments may be identical or different.

### [Obstacle]

In the relationship 2 of the present teaching and the embodiments, an obstacle may or may not exist except one motorcycle. It is noted that, in the relationship 2, there is no obstacle between the one motorcycle and the leaning vehicle.

In the relationship 3 and the relationship 7 of the present teaching and the embodiments, an obstacle may or may not exist except plural motorcycles. It is noted that, in the relationship 3 and the relationship 7, there is no obstacle behind the plural motorcycles.

In the present teaching and the embodiments, an expression "there is no obstacle" indicates that no obstacle exists in an area that is within 10 meters on the both sides of a linear line passing through the center in the vehicle width direction of a leaning vehicle (host vehicle) and within 100 meters of the leaning vehicle in the traveling direction of the leaning vehicle.

### [Turning]

In the present teaching and the embodiments, turning is not limited to an act of turning at an intersection and an act of running on a curved lane. The turning encompasses an act of changing the traveling direction within a linear lane. The turning encompasses an act of changing the traveling direction in order to change the running lane. An FCW control device that does not output an FCW while a leaning vehicle (host vehicle) is turning is electrically connected to a turning-related sensor which is configured to acquire information related to turning of the leaning vehicle. Examples of the turning-related sensor include an IMU (Inertial Measurement Unit), a sensor configured to detect a steering angle or a steering torque, a GPS (Global Positioning System), and a camera for obtaining an image. The turning-related sensor may be a combination of these sensors. For example, the sensor may perform determination regarding turning based on both a roll rate and a yaw rate. Alternatively, the sensor may perform determination regarding turning based on either a roll rate or a yaw rate.

### [Specific Means]

The hardware structures of the FCW control device of the present teaching and the embodiments and of the leaning vehicle including this control device are not detailed in this description. Because the features of the present teaching and the embodiments are technologies related to control, a person with ordinary skill in the art would understand that the leaning vehicle including the FCW control device recited in the present teaching and the embodiments can be embodied by known hardware structures of an FCW control device and the hardware structures of a leaning vehicle including the FCW control device.

### <Others>

In the present teaching and the embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching and the embodiments, terms "including", "comprising", "having", and derivatives thereof are used to encompass not only listed items and equivalents thereof but also additional items.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In addition, in the present teaching and the embodiments, the term "may" is non-exclusive. "May be" means "may be but not limited to". In the present teaching and the embodiments, an arrangement which is explained by using the term "may" exerts at least the above-described effects of the arrangement of claim 1.

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as an embodiment other than the below-described embodiment.

### [Brief Description of Drawings]

FIG. 1 outlines a leaning vehicle of an embodiment of the present teaching.
FIG. 2 outlines a leaning vehicle of an embodiment of the present teaching.
FIG. 3 outlines a leaning vehicle of an embodiment of the present teaching.
FIG. 4 outlines a leaning vehicle of an embodiment of the present teaching.
FIG. 5 outlines a leaning vehicle of an embodiment of the present teaching.
FIG. 6 outlines a leaning vehicle of an embodiment of the present teaching.
FIG. 7 outlines a leaning vehicle of an embodiment of the present teaching.
FIG. 8 outlines a leaning vehicle of an embodiment of the present teaching.
FIG. 9 outlines a leaning vehicle of an embodiment of the present teaching.
FIG. 10 is a flow chart of an example of a process executed by an FCW control device of a leaning vehicle of an embodiment of the present teaching.

### [Description of Embodiments]

The following will describe a leaning vehicle 101 of an embodiment of the present teaching with reference to figures. In the drawings, U indicates a direction upward from a leaning vehicle, D indicates a direction downward from the leaning vehicle, L indicates a direction leftward from the leaning vehicle, R indicates a direction rightward from the leaning vehicle, F indicates a direction forward from the leaning vehicle, and Re indicates a direction rearward from the leaning vehicle. When the leaning vehicle 101 linearly runs, the left-right direction of the leaning vehicle is identical with the vehicle width direction of the leaning vehicle.

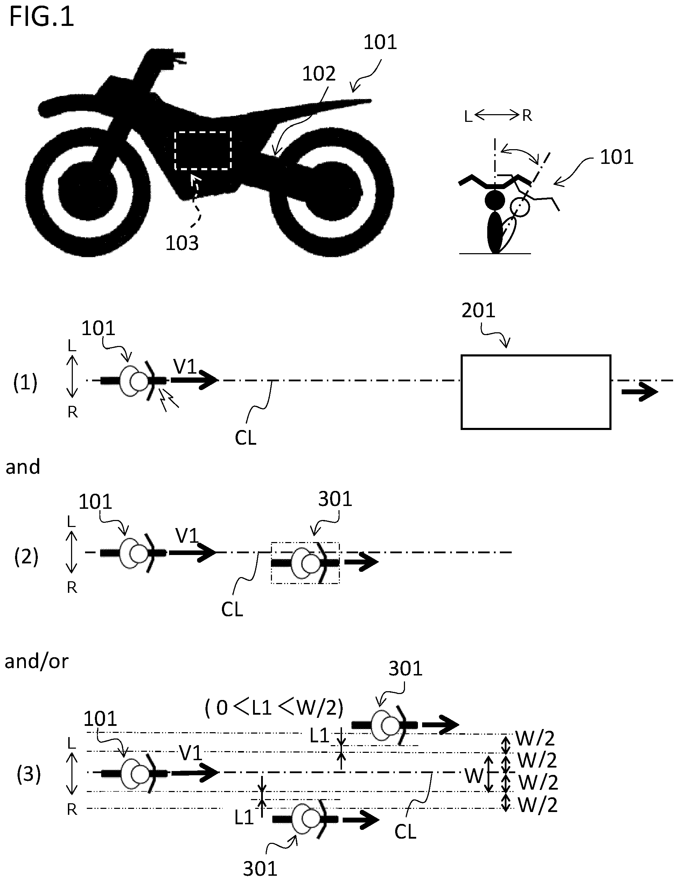

The leaning vehicle 101 shown in FIG. 1 includes an FCW control device 103 mounted on a leaning vehicle body frame 102 which leans rightward in the vehicle left-right direction when turning right and leans leftward in the vehicle left-right direction when turning left. The FCW control device 103 outputs an FCW based on a margin acquired based on the relationship between an obstacle and the leaning vehicle 101. The FCW control device 103 performs control to establish a relationship 1 described below and performs control to establish at least one of a relationship 2 or a relationship 3 described below. (1), (2), and (3) in FIG. 1 indicate examples of the relationship 1, the relationship 2, and the relationship 3, respectively.

The relationship 1: When the leaning vehicle 101 linearly runs at a first vehicle speed V1, one automobile 201 exists ahead of the leaning vehicle 101 and is located on a linear line CL passing through the center in the vehicle width direction of the leaning vehicle 101, and there is no obstacle except the automobile 201, the FCW control device 103 outputs the FCW based on a margin acquired based on the relationship between the automobile 201 and the leaning vehicle 101.

The relationship 2: When the leaning vehicle 101 linearly runs at the first vehicle speed V1 and one motorcycle 301 exists ahead of the leaning vehicle 101 and is located on a linear line CL passing through the center in the vehicle width direction of the leaning vehicle 101, the FCW control device 103 does not output the FCW irrespective of the distance between the motorcycle 301 and the leaning vehicle 101 in the traveling direction of the leaning vehicle 101.

The relationship 3: When the leaning vehicle 101 linearly runs at the first vehicle speed V1 and plural motorcycles 301 exist ahead of the leaning vehicle 101 so that the distance between each motorcycle 301 and the leaning vehicle 101 in the vehicle width direction of the leaning vehicle 101 is equal to a first distance L1 that is longer than zero and shorter than a half of the vehicle width W of the leaning vehicle, the FCW control device 103 does not output the FCW irrespective of the distance between each of the plural motorcycles 301 and the leaning vehicle 101 in the traveling direction of the leaning vehicle 101.

In a situation in which leaning vehicles are running in a tightly gathered manner, a rider of a leaning vehicle that is not at the top of the group of the leaning vehicles does not need the output of the FCW. Therefore, because the FCW is not output in the relationship 2 in which leaning vehicles are likely to run in a tightly gathered manner or in the relationship 3 in which leaning vehicles run in a tightly gathered manner, it is possible to employ hardware resource with low processing capability and small memory capacity. As a result, the degree of freedom in designing the hardware resource of the FCW control device 103 can be improved.

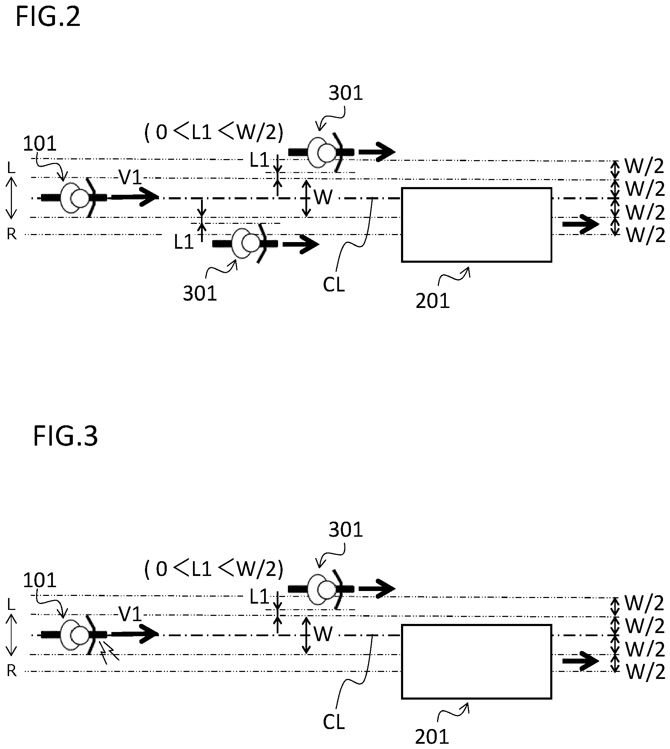

It is noted that all leaning vehicles 101 shown in FIG. 2 and subsequent drawings are structurally identical with the leaning vehicle 101 shown in FIG. 1.

In the relationship 3, there may be no obstacle except the plural motorcycles 301. This case is equivalent to a relationship 4 of the present teaching.

In the relationship 3, as shown in, for example, FIG. 2, one automobile 201 may exist ahead of the plural motorcycles 301 and be located on the linear line CL passing through the center in the vehicle width direction of the leaning vehicle 101. This case is equivalent to a relationship 5 of the present teaching.

The FCW control device 103 of the leaning vehicle 101 shown in FIG. 3 performs control to establish the above-described relationship 3 and a relationship 6 described below. The leaning vehicle 101 shown in FIG. 3 may be structurally identical with the leaning vehicle 101 shown in FIG. 2.

The relationship 6: When the leaning vehicle 101 linearly runs at the first vehicle speed V1, one automobile 201 exists on the linear line CL that passes through the center in the vehicle width direction of the leaning vehicle 101, one motorcycle 301 exists behind the automobile 201 and ahead of the leaning vehicle 101 so that the distance between the motorcycle 301 and the leaning vehicle 101 in the vehicle width direction of the leaning vehicle 101 is equal to the first distance L1, and there is no obstacle except the one automobile 201 and the one motorcycle 301, the FCW control device 103 outputs the FCW based on a margin acquired based on the relationship between the automobile 201 and the leaning vehicle 101.

Although not illustrated, when the leaning vehicle 101 linearly runs at the first vehicle speed V1, one motorcycle 301 exists ahead of the leaning vehicle 101 so that the distance between the motorcycle 301 and the leaning vehicle 101 in the vehicle width direction of the leaning vehicle 101 is equal to the first distance L1, and there is no obstacle except the one motorcycle 301, the FCW control device 103 may not output the FCW irrespective of the distance between the motorcycle 301 and the leaning vehicle 101 in the traveling direction of the leaning vehicle 101, or may output the FCW based on a margin acquired based on the relationship between the motorcycle 301 and the leaning vehicle 101.

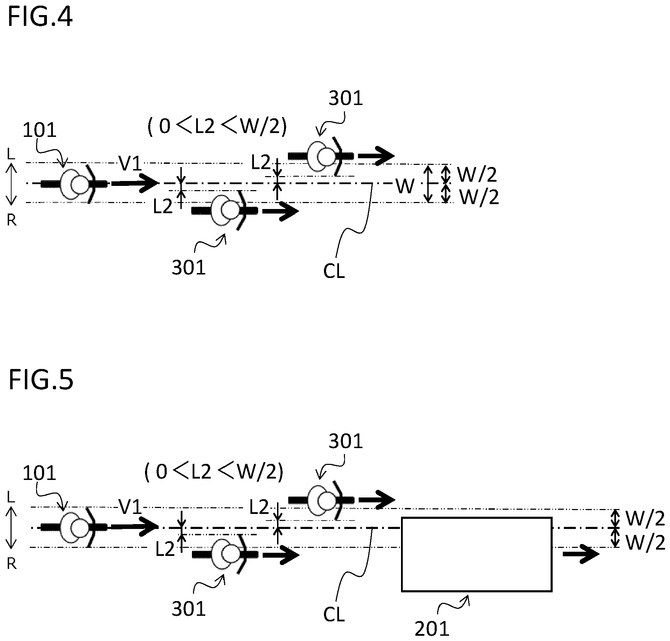

The FCW control device 103 of the leaning vehicle 101 shown in FIG. 4 performs control to establish a relationship 7 described below. The leaning vehicle 101 shown in FIG. 4 may be structurally identical with the leaning vehicle 101 shown in at least one of FIG. 2 or FIG. 3.

The relationship 7: When the leaning vehicle 101 linearly runs at the first vehicle speed V1 and plural motorcycles 301 exist ahead of the leaning vehicle 101 so that the distance between the linear line CL passing through the center in the vehicle width direction of the leaning vehicle 101 and each of the motorcycles 301 in the vehicle width direction of the leaning vehicle 101 is equal to a second distance L2 that is longer than zero and shorter than a half of the vehicle width W of the leaning vehicle, the FCW control device 103 does not output the FCW irrespective of the distance between each of the plural motorcycles 301 and the leaning vehicle 101 in the traveling direction of the leaning vehicle 101.

In the relationship 7, leaning vehicles including the leaning vehicle 101 run in a more tightly gathered manner than the leaning vehicles of the relationship 3. On this account, the rider of the leaning vehicle 101 is further reliably paying attention to the surroundings. The rider of the leaning vehicle 101 does not therefore require the output of the FCW. Because the FCW is not output in the situation in which the leaning vehicles run in a more densely gathered manner, the degree of freedom in designing the hardware resource of the FCW control device 103 can be improved.

In the relationship 7, there may be no obstacle except the plural motorcycles 301. This case is equivalent to a relationship 8 of the present teaching.

In the relationship 8, as shown in, for example, FIG. 5, one automobile 201 may exist ahead of the plural motorcycles 301 and be located on the linear line CL passing through the center in the vehicle width direction of the leaning vehicle 101. This case is equivalent to a relationship 9 of the present teaching.

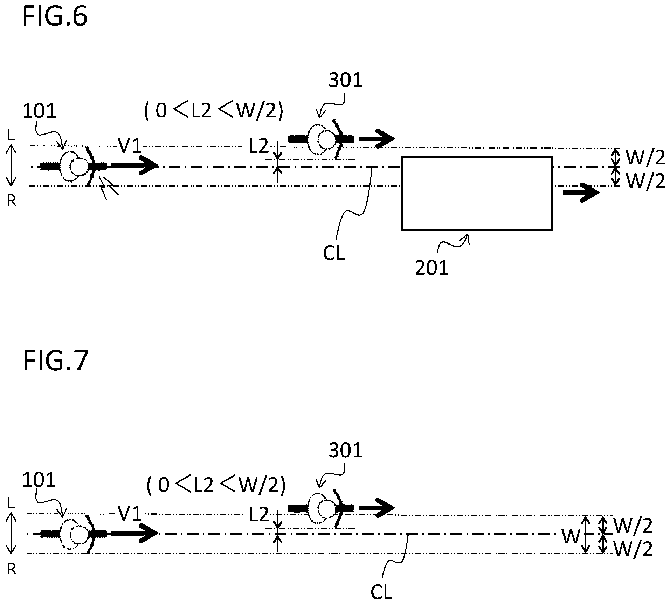

The FCW control device 103 of the leaning vehicle 101 shown in FIG. 6 performs control to establish a relationship 10 described below. The leaning vehicle 101 shown in FIG. 6 may be structurally identical with the leaning vehicle 101 shown in at least one of FIG. 2 to FIG. 5.

The relationship 10: When the leaning vehicle 101 linearly runs at the first vehicle speed V1, one automobile 201 exists on the linear line CL that passes through the center in the vehicle width direction of the leaning vehicle 101, one motorcycle 301 exists behind the automobile 201 and ahead of the leaning vehicle 101 so that the distance between the linear line CL passing through the center in the vehicle width direction of the leaning vehicle 101 and the motorcycle 301 in the vehicle width direction of the leaning vehicle 101 is equal to the second distance, and there is no obstacle except the one automobile 201 and the one motorcycle 301, the FCW control device 103 outputs the FCW based on a margin acquired based on the relationship between the automobile 201 and the leaning vehicle 101.

Instead of performing control to establish the relationship 10, the FCW control device 103 may perform control to establish a relationship 11 described below. Alternatively, both the control of establishing the relationship 10 and the control of establishing the relationship 11 may be executable by the FCW control device 103.

The relationship 11: When the leaning vehicle 101 linearly runs at the first vehicle speed V1, one automobile 201 exists on the linear line CL that passes through the center in the vehicle width direction of the leaning vehicle 101, one motorcycle 301 exists behind the automobile 201 and ahead of the leaning vehicle 101 so that the distance between the linear line CL passing through the center in the vehicle width direction of the leaning vehicle 101 and the motorcycle 301 in the vehicle width direction of the leaning vehicle 101 is equal to the second distance L2, and there is no obstacle except the one automobile 201 and the one motorcycle 301, the FCW control device 103 does not output the FCW irrespective of the distance between the automobile 201 and the leaning vehicle 101 in the traveling direction of the leaning vehicle 101.

In the relationship 11, the one motorcycle 301 exists ahead of the leaning vehicle 101, and the distance between the linear line CL passing through the center in the vehicle width direction of the leaning vehicle 101 and the motorcycle 301 in the vehicle width direction of the leaning vehicle 101 is equal to the second distance L2 that is longer than zero and shorter than a half of the vehicle width W of the leaning vehicle. In such a situation, leaning vehicles including the leaning vehicle 101 are highly likely to run in a densely gathered manner. Because the FCW is not output in the situation in which the leaning vehicles run in a densely gathered manner, the degree of freedom in designing the hardware resource of the FCW control device 103 can be improved.

The FCW control device 103 of the leaning vehicle 101 shown in FIG. 7 performs control to establish a relationship 14 described below. The leaning vehicle 101 shown in FIG. 7 may be structurally identical with the leaning vehicle 101 shown in at least one of FIG. 2 to FIG. 6.

The relationship 14: When the leaning vehicle 101 linearly runs at the first vehicle speed V1, one motorcycle 301 exists ahead of the leaning vehicle 101 so that the distance between the linear line CL passing through the center in the vehicle width direction of the leaning vehicle 101 and the motorcycle 301 in the vehicle width direction of the leaning vehicle 101 is equal to the second distance L2, and there is no obstacle except the one motorcycle 301, the FCW control device 103 does not output the FCW irrespective of the distance between the motorcycle 301 and the leaning vehicle 101 in the traveling direction of the leaning vehicle 101.

Instead of performing control to establish the relationship 14, the FCW control device 103 may perform control to establish a relationship 15 described below. Alternatively, both the control of establishing the relationship 14 and the control of establishing the relationship 15 may be executable by the FCW control device 103.

The relationship 15: When the leaning vehicle 101 linearly runs at the first vehicle speed V1, one motorcycle 301 exists ahead of the leaning vehicle 101 so that the distance between the linear line CL passing through the center in the vehicle width direction of the leaning vehicle 101 and the motorcycle 301 in the vehicle width direction of the leaning vehicle 101 is equal to the second distance L2, and there is no obstacle except the one motorcycle 301, the FCW control device 103 outputs the FCW based on a margin acquired based on the relationship between the motorcycle 301 and the leaning vehicle 101.

While the leaning vehicle 101 shown in at least one of FIG. 1 to FIG. 7 is turning, the FCW control device 103 of the leaning vehicle 101 may not output the FCW no matter whether an obstacle exists. In the leaning vehicle 101, for example, the FCW control device 103 may determine whether the leaning vehicle 101 is turning, based on a yaw rate and a roll rate detected by an IMU (Inertial Measurement Unit). When the leaning vehicle 101 is turning, there is a possibility that the vehicle is avoiding an obstacle. In other words, when the leaning vehicle 101 is turning, there is a possibility that the rider has already started a necessary operation in accordance with the state of the surroundings. On this account, when the leaning vehicle 101 is turning, it is difficult to determine whether an operation by the rider of the leaning vehicle 101 is required. In other words, it is difficult to determine whether to output the FCW. Because the FCW is not output in such a situation in which the determination is difficult, it is possible to decrease the number of types of data used for determining whether to output the FCW and to further decrease the detection accuracy of data used for determining whether to output the FCW. Therefore, it is possible to use hardware resource having a smaller processing capability or memory capacity. As a result, the degree of freedom in designing the hardware resource of the FCW control device 103 can be further improved.

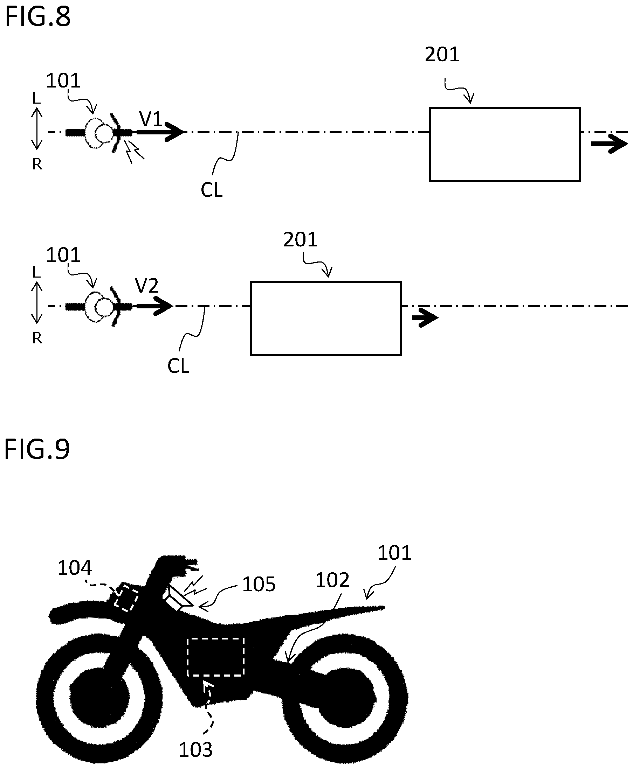

While the leaning vehicle 101 shown in FIG. 8 is running at vehicle speed that is equal to or lower than a second vehicle speed V2 that is lower than the first vehicle speed V1, the FCW control device 103 of the leaning vehicle 101 does not output the FCW no matter whether an obstacle exists. The second vehicle speed V2 may be 10 Km/h, for example. The leaning vehicle 101 shown in FIG. 8 may be structurally identical with the leaning vehicle 101 shown in at least one of FIG. 2 to FIG. 7. Because the FCW is not output when the leaning vehicle 101 runs at low speed, the number of times of determination of whether to output the FCW can be reduced. On this account, it is possible to decrease the number of types of data used for determining whether to output the FCW and to further decrease the detection accuracy of data used for determining whether to output the FCW. Therefore, it is possible to use hardware resource having a smaller processing capability or memory capacity. As a result, the degree of freedom in designing the hardware resource of the FCW control device 103 can be further improved.

The leaning vehicle 101 shown in FIG. 9 includes a margin-related sensor 104. The margin-related sensor 104 is constituted by at least one of a front sensor configured to detect an object ahead of the leaning vehicle 101 or a vehicle-to-vehicle communication apparatus configured to receive, from another vehicle, a signal related to location information of the other vehicle. The position of the margin-related sensor 104 is not limited to the position shown in FIG. 9. Based on information acquired by the margin-related sensor 104, the FCW control device 103 acquires the relationship between an object ahead of the leaning vehicle 101 and the leaning vehicle 101 and a margin based on the relationship between the obstacle and the leaning vehicle 101. The leaning vehicle 101 shown in FIG. 9 further includes a notification device 105 configured to give a notification to the rider. The FCW control device 103 outputs the FCW by controlling the notification device 105.

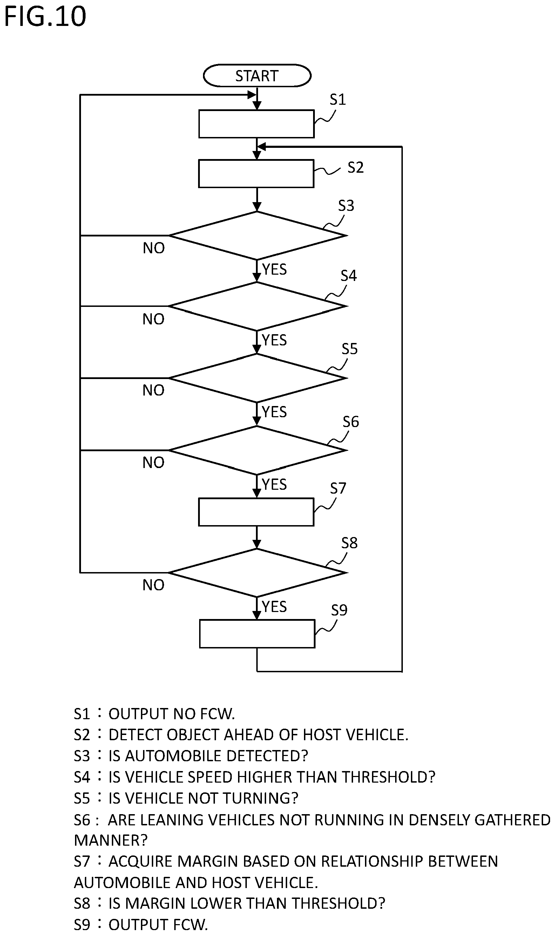

FIG. 10 is a flow chart of an example of a process executed by the FCW control device 103 shown in FIG. 1. In the step S1, the FCW control device 103 does not output the FCW. In the step S2, an object ahead of the leaning vehicle 101 is detected based on information acquired by the margin-related sensor 104. In the step S3, whether the detected object includes an automobile 201 is determined. When the automobile 201 is not included, the process returns to the step S1. When the automobile 201 is included, the process proceeds to the step S4 and whether the vehicle speed of the leaning vehicle 101 is higher than a threshold is determined. When the vehicle speed is equal to or lower than the threshold, the process goes back to the step S1. When the vehicle speed is higher than the threshold, the process proceeds to the step S5 and whether the leaning vehicle 101 is turning is determined. When the leaning vehicle 101 is turning, the process goes back to the step S1. When the leaning vehicle 101 is not turning, the process proceeds to the step S6. In the step S6, whether leaning vehicles including the host vehicle 101 are assumed to run in a densely gathered manner is determined. When it is assumed that the leaning vehicles run in a densely gathered manner, the process goes back to the step S1. When it is assumed that the leaning vehicles do not run in a densely gathered manner, the process proceeds to the step S7 and a margin is acquired based on the relationship between the automobile 201 and the leaning vehicle 101. When plural automobiles 201 are detected in the step S2, for example, a margin is acquired based on the relationship between an automobile 201 that is closest to the linear line CL passing through the center in the vehicle width direction of the leaning vehicle 101 and the leaning vehicle 101. In the step S8, whether the acquired margin is lower than a threshold is determined. When the margin is equal to or higher than the threshold, the process goes back to the step S1. When the margin is lower than the threshold, the FCW control device 103 outputs the FCW.

The step S6 may include, for example, determination of whether at least one motorcycle 301 exists on the linear line CL passing through the center in the vehicle width direction of the leaning vehicle 101. In this case, when one motorcycle 301 exists on the linear line CL passing through the center in the vehicle width direction of the leaning vehicle 101 and one automobile 201 exists ahead of the motorcycle 301, the FCW control device 103 outputs the FCW based on a margin acquired based on the relationship between the automobile 201 and the leaning vehicle 101.

In FIG. 10, a margin based on the relationship between the motorcycle 301 and the leaning vehicle 101 is not acquired. The FCW control device 103 does not therefore output the FCW based on the margin acquired based on the relationship between the motorcycle 301 and the leaning vehicle 101. However, in a leaning vehicle of the present teaching and the embodiments, an FCW may be output based on a margin acquired based on the relationship between a motorcycle and the leaning vehicle. The relationship 12 and the relationship 14 described above are examples of cases where a margin based on the relationship between a motorcycle and a leaning vehicle is not acquired. The relationship 13 and the relationship 15 described above are examples of cases where an FCW is output based on a margin acquired based on the relationship between a motorcycle and a leaning vehicle.

In FIG. 10, after the FCW is output in the step S9, the FCW control device 103 continues the output of the FCW until the process proceeds to the step S1. Alternatively, when it is determined that the FCW control device 103 outputs the FCW, the FCW may be output only during a predetermined period of time.

The FCW control device described in the specification is encompassed in a driving assist controller for a leaning vehicle recited in the specification of Japanese Patent Application No. 2019-175786 that is a basic application of the subject application. The FCW in this specification is equivalent to a warning in the specification of the basic application. The notification device in this specification is equivalent to a warning means and a warning device 70 in the specification of the basic application.

### [Reference Signs List]

101: leaning vehicle, 102: leaning vehicle body frame, 103: FCW control device, 104: margin-related sensor (at least one of front sensor or vehicle-to-vehicle communication apparatus), 201: automobile, 301: motorcycle

## Claims

1. A leaning vehicle (101) including a Forward Collision Warning, FCW, control device (103) which is mounted on a leaning vehicle body frame which leans rightward in a vehicle left-right direction when turning right and leans leftward in the vehicle left-right direction when turning left, the FCW control device (103) being configured to output an FCW based on a margin acquired based on a relationship between an obstacle and the leaning vehicle (101),
the margin acquired based on relationship between an obstacle (201) and the leaning vehicle (101) is a margin when a rider deals with the obstacle,
the leaning vehicle (101) comprising at least one of a front sensor configured to detect an object ahead of the leaning vehicle (101) or a vehicle-to-vehicle communication apparatus configured to receive, from another vehicle, a signal related to location information of the other vehicle,
the FCW control device (103) being configured to acquire the margin based on the relationship between the obstacle (201) and the leaning vehicle (101), with reference to information acquired by at least one of the front sensor or the vehicle-to-vehicle communication apparatus,
the FCW control device (103) being configured to perform control to establish a relationship 1, and at least one of a relationship 2 or a relationship 3:
the relationship 1: when the leaning vehicle (101) linearly runs at a first vehicle speed (V1), one automobile (201) exists ahead of the leaning vehicle (101) and is located on a linear line (CL) passing through the center in a vehicle width direction of the leaning vehicle (101), and there is no obstacle except the automobile (201), the FCW control device (103) outputs the FCW based on the margin acquired based on the relationship between the automobile (201) and the leaning vehicle (101);
the relationship 2: when the leaning vehicle (101) linearly runs at the first vehicle speed (V1) and one motorcycle (301) exists ahead of the leaning vehicle (101) and is located on the linear line (CL) passing through the center in the vehicle width direction of the leaning vehicle (101), the FCW control device (103) does not output the FCW irrespective of the distance between the motorcycle (301) and the leaning vehicle (101) in the traveling direction of the leaning vehicle (101); and
the relationship 3: when the leaning vehicle (101) linearly runs at the first vehicle speed (V1) and plural motorcycles (301) exist ahead of the leaning vehicle (101) so that the distance between each of the plural motorcycles (301) and the leaning vehicle (101) in the vehicle width direction of the leaning vehicle (101) is equal to a first distance (L1) that is longer than zero and shorter than a half of the vehicle width of the leaning vehicle (101), the FCW control device (103) does not output the FCW irrespective of the distance between each of the plural motorcycles (301) and the leaning vehicle (101) in the traveling direction of the leaning vehicle (101).

2. The leaning vehicle (101) according to claim 1, wherein the FCW control device (103) is configured to perform control to establish the relationship 3 and a relationship 4:
the relationship 4: when the leaning vehicle (101) linearly runs at the first vehicle speed (V1), plural motorcycles (301) exist ahead of the leaning vehicle (101) so that the distance between each of the plural motorcycles (301) and the leaning vehicle (101) in the vehicle width direction of the leaning vehicle (101) is equal to the first distance (L1), and there is no obstacle except the plural motorcycles (301), the FCW control device (103) does not output the FCW irrespective of the distance between each of the plural motorcycles (301) and the leaning vehicle (101) in the traveling direction of the leaning vehicle (101).

3. The leaning vehicle (101) according to claim 1 or 2, wherein the FCW control device (103) is configured to perform control to establish the relationship 3 and a relationship 5:
the relationship 5: when the leaning vehicle (101) linearly runs at the first vehicle speed (V1), one automobile (201) exists on the linear line (CL) passing through the center in the vehicle width direction of the leaning vehicle (101), plural motorcycles (301) exist behind the automobile (201) and ahead of the leaning vehicle (101) so that the distance between each of the plural motorcycles (301) and the leaning vehicle (101) in the vehicle width direction of the leaning vehicle (101) is equal to the first distance (L1), and there is no obstacle except the automobile (201) and the plural motorcycles (301), the FCW control device (103) does not output the FCW irrespective of the distance between the automobile (201) and the leaning vehicle (101) in the traveling direction of the leaning vehicle (101).

4. The leaning vehicle (101) according to any one of claims 1 to 3,
wherein the FCW control device (103) is configured to perform control to establish the relationship 3 and a relationship 6:
the relationship 6: when the leaning vehicle (101) linearly runs at the first vehicle speed (V1), one automobile (201) exists on the linear line (CL) that passes through the center in the vehicle width direction of the leaning vehicle (101), one motorcycle (301) exists behind the automobile (201) and ahead of the leaning vehicle (101) so that the distance between the motorcycle (301) and the leaning vehicle (101) in the vehicle width direction of the leaning vehicle (101) is equal to the first distance (L1), and there is no obstacle except the automobile (201) and the motorcycle (301), the FCW control device (103) outputs the FCW based on the margin acquired based on the relationship between the automobile (201) and the leaning vehicle (101).

5. The leaning vehicle (101) according to any one of claims 1 to 4, wherein, while the leaning vehicle (101) is turning, the FCW control device (103) is configured not to output the FCW no matter whether there is the obstacle.

6. The leaning vehicle (101) according to any one of claims 1 to 5, wherein, while the leaning vehicle (101) is running at vehicle speed equal to or lower than a second vehicle speed that is lower than the first vehicle speed (V1), the FCW control device (103) is configured not to output the FCW no matter whether there is the obstacle.

7. The leaning vehicle (101) according to any one of claims 1 to 6, wherein the FCW control device (103) is configured to perform control to establish a relationship 7:
the relationship 7: when the leaning vehicle (101) linearly runs at the first vehicle speed (V1) and plural motorcycles (301) exist ahead of the leaning vehicle (101) so that the distance between the linear line (CL) passing through the center in the vehicle width direction of the leaning vehicle (101) and each of the motorcycles (301) in the vehicle width direction of the leaning vehicle (101) is equal to a second distance that is longer than zero and shorter than a half of the vehicle width of the leaning vehicle (101), the FCW control device (103) does not output the FCW irrespective of the distance between each of the plural motorcycles (301) and the leaning vehicle (101) in the traveling direction of the leaning vehicle (101).

8. The leaning vehicle (101) according to claim 7, wherein the FCW control device (103) is configured to perform control to establish a relationship 8:
the relationship 8: when the leaning vehicle (101) linearly runs at the first vehicle speed (V1), plural motorcycles (301) exist ahead of the leaning vehicle (101) so that the distance between the linear line (CL) passing through the center in the vehicle width direction of the leaning vehicle (101) and each of the plural motorcycles (301) in the vehicle width direction of the leaning vehicle (101) is equal to the second distance, and there is no obstacle except the plural motorcycles (301), the FCW control device (103) does not output the FCW irrespective of the distance between each of the plural motorcycles (301) and the leaning vehicle (101) in the traveling direction of the leaning vehicle (101).

9. The leaning vehicle (101) according to claim 7 or 8, wherein the FCW control device (103) is configured to perform control to establish a relationship 9:
the relationship 9: when the leaning vehicle (101) linearly runs at the first vehicle speed (V1), one automobile (201) exists on the linear line (CL) passing through the center in the vehicle width direction of the leaning vehicle (101), plural motorcycles (301) exist behind the automobile (201) and ahead of the leaning vehicle (101) so that the distance between the linear line (CL) passing through the center in the vehicle width direction of the leaning vehicle (101) and each of the motorcycles (301) in the vehicle width direction of the leaning vehicle (101) is equal to the second distance, and there is no obstacle except the automobile (201) and the plural motorcycles (301), the FCW control device (103) does not output the FCW irrespective of the distance between the automobile (201) and the leaning vehicle (101) in the traveling direction of the leaning vehicle (101).

10. The leaning vehicle (101) according to any one of claims 7 to 9, wherein the FCW control device (103) is configured to perform control to establish a relationship 10:
the relationship 10: when the leaning vehicle (101) linearly runs at the first vehicle speed (V1), one automobile (201) exists on the linear line (CL) that passes through the center in the vehicle width direction of the leaning vehicle (101), one motorcycle (301) exists behind the automobile (201) and ahead of the leaning vehicle (101) so that the distance between the linear line (CL) passing through the center in the vehicle width direction of the leaning vehicle (101) and the motorcycle (301) in the vehicle width direction of the leaning vehicle (101) is equal to the second distance, and there is no obstacle except the automobile (201) and the motorcycle (301), the FCW control device (103) outputs the FCW based on the margin acquired based on the relationship between the automobile (201) and the leaning vehicle (101).

11. The leaning vehicle (101) according to any one of claims 7 to 9, wherein the FCW control device (103) is configured to perform control to establish a relationship 11:
the relationship 11: when the leaning vehicle (101) linearly runs at the first vehicle speed (V1), one automobile (201) exists on the linear line (CL) passing through the center in the vehicle width direction of the leaning vehicle (101), one motorcycle (301) exists behind the automobile (201) and ahead of the leaning vehicle (101) so that the distance between the linear line (CL) passing through the center in the vehicle width direction of the leaning vehicle (101) and the motorcycle (301) in the vehicle width direction of the leaning vehicle (101) is equal to the second distance, and there is no obstacle except the automobile (201) and the motorcycle (301), the FCW control device (103) does not output the FCW irrespective of the distance between the automobile (201) and the leaning vehicle (101) in the traveling direction of the leaning vehicle (101).

## Patentansprüche

1. Ein Neigungsfahrzeug (101), das eine Vorwärtskollisionswarnung, FCW,-Steuervorrichtung (103) umfasst, die an einem Neigungsfahrzeugkörperrahmen befestigt ist, der sich in einer Fahrzeug-Links-Rechts-Richtung beim Rechtsabbiegen nach rechts neigt und in der Fahrzeug-Links-Rechts-Richtung beim Linksabbiegen nach links neigt, wobei die FCW-Steuervorrichtung (103) konfiguriert ist, eine FCW auszugeben basierend auf einem Spielraum, der basierend auf einer Beziehung zwischen einem Hindernis und dem Neigungsfahrzeug (101) erfasst wird,
wobei der Spielraum, der basierend auf einer Beziehung zwischen einem Hindernis (201) und dem Neigungsfahrzeug (101) erfasst wird, ein Spielraum ist, wenn ein Fahrer mit dem Hindernis umgeht,
wobei das Neigungsfahrzeug (101) zumindest einen eines Vordersensors, der konfiguriert ist, ein Objekt vor dem Neigungsfahrzeug (101) zu erfassen, oder eine Fahrzeug-zu-Fahrzeug-Kommunikationsvorrichtung aufweist, die konfiguriert ist, von einem anderen Fahrzeug ein Signal zu empfangen, das sich auf Positionsinformationen des anderen Fahrzeugs bezieht,
wobei die FCW-Steuervorrichtung (103) konfiguriert ist, den Spielraum basierend auf der Beziehung zwischen dem Hindernis (201) und dem Neigungsfahrzeug (101) zu erfassen, mit Bezugnahme auf Informationen, die durch zumindest einen des Vordersensors oder der Fahrzeug-zu-Fahrzeug-Kommunikationsvorrichtung erfasst werden,
wobei die FCW-Steuervorrichtung (103) konfiguriert ist, eine Steuerung durchzuführen, um eine Beziehung 1 und zumindest eine einer Beziehung 2 oder einer Beziehung 3 herzustellen:
die Beziehung 1: Wenn das Neigungsfahrzeug (101) linear mit einer ersten Fahrzeuggeschwindigkeit (V1) fährt, ein Kraftfahrzeug (201) vor dem Neigungsfahrzeug (101) existiert und sich auf einer linearen Linie (CL) befindet, die in einer Fahrzeugbreiterichtung des Neigungsfahrzeugs (101) durch die Mitte verläuft und es kein Hindernis außer dem Kraftfahrzeug (201) gibt, gibt die FCW-Steuervorrichtung (103) die FCW basierend auf dem Spielraum aus, der basierend auf der Beziehung zwischen dem Kraftfahrzeug (201) und dem Neigungsfahrzeug (101) erfasst wird;
die Beziehung 2: Wenn das Neigungsfahrzeug (101) linear mit der ersten Fahrzeuggeschwindigkeit (V1) fährt und ein Motorrad (301) vor dem Neigungsfahrzeug (101) existiert und sich auf der linearen Linie (CL) befindet, die in der Fahrzeugbreiterichtung des Neigungsfahrzeugs (101) durch die Mitte verläuft, gibt die FCW-Steuervorrichtung (103) die FCW nicht aus, unabhängig von dem Abstand zwischen dem Motorrad (301) und dem Neigungsfahrzeug (101) in der Fahrtrichtung des Neigungsfahrzeugs (101); und
die Beziehung 3: Wenn das Neigungsfahrzeug (101) linear mit der ersten Fahrzeuggeschwindigkeit (V1) fährt und mehrere Motorräder (301) vor dem Neigungsfahrzeug (101) existieren, so dass der Abstand zwischen jedem der mehreren Motorräder (301) und dem Neigungsfahrzeug (101) in der Fahrzeugbreiterichtung des Neigungsfahrzeugs (101) gleich einem ersten Abstand (L1) ist, der länger als Null und kürzer als eine Hälfte der Fahrzeugbreite des Neigungsfahrzeugs (101) ist, gibt die FCW-Steuervorrichtung (103) die FCW nicht aus, unabhängig von dem Abstand zwischen jedem der mehreren Motorräder (301) und dem Neigungsfahrzeug (101) in der Fahrtrichtung des Neigungsfahrzeugs (101).

2. Das Neigungsfahrzeug (101) gemäß Anspruch 1, bei dem die FCW-Steuervorrichtung (103) konfiguriert ist, eine Steuerung durchzuführen, um die Beziehung 3 und eine Beziehung 4 herzustellen:
die Beziehung 4: Wenn das Neigungsfahrzeug (101) linear mit der ersten Fahrzeuggeschwindigkeit (V1) fährt, mehrere Motorräder (301) vor dem Neigungsfahrzeug (101) existieren, so dass der Abstand zwischen jedem der mehreren Motorräder (301) und dem Neigungsfahrzeug (101) in der Fahrzeugbreiterichtung des Neigungsfahrzeugs (101) gleich dem ersten Abstand (L1) ist, und es kein Hindernis außer den mehreren Motorrädern (301) gibt, gibt die FCW-Steuervorrichtung (103) die FCW nicht aus, unabhängig von dem Abstand zwischen jedem der mehreren Motorräder (301) und dem Neigungsfahrzeug (101) in der Fahrtrichtung des Neigungsfahrzeugs (101).

3. Das Neigungsfahrzeug (101) gemäß Anspruch 1 oder 2, bei dem die FCW-Steuervorrichtung (103) konfiguriert ist, eine Steuerung durchzuführen, um die Beziehung 3 und eine Beziehung 5 herzustellen:
die Beziehung 5: Wenn das Neigungsfahrzeug (101) linear mit der ersten Fahrzeuggeschwindigkeit (V1) fährt, ein Kraftfahrzeug (201) auf der linearen Linie (CL) existiert, die in der Fahrzeugbreiterichtung des Neigungsfahrzeugs (101) durch die Mitte verläuft, mehrere Motorräder (301) hinter dem Kraftfahrzeug (201) und vor dem Neigungsfahrzeug (101) existieren, so dass der Abstand zwischen jedem der mehreren Motorräder (301) und dem Neigungsfahrzeug (101) in der Fahrzeugbreiterichtung des Neigungsfahrzeugs (101) gleich dem ersten Abstand (L1) ist, und es kein Hindernis außer dem Kraftfahrzeug (201) und den mehreren Motorrädern (301) gibt, gibt die FCW-Steuervorrichtung (103) die FCW nicht aus, unabhängig von dem Abstand zwischen dem Kraftfahrzeug (201) und dem Neigungsfahrzeug (101) in der Fahrtrichtung des Neigungsfahrzeugs (101).

4. Das Neigungsfahrzeug (101) gemäß einem der Ansprüche 1 bis 3, bei dem die FCW-Steuervorrichtung (103) konfiguriert ist, eine Steuerung durchzuführen, um die Beziehung 3 und eine Beziehung 6 herzustellen:
die Beziehung 6: Wenn das Neigungsfahrzeug (101) linear mit der ersten Fahrzeuggeschwindigkeit (V1) fährt, ein Kraftfahrzeug (201) auf der linearen Linie (CL) existiert, die in der Fahrzeugbreiterichtung des Neigungsfahrzeugs (101) durch die Mitte verläuft, ein Motorrad (301) hinter dem Kraftfahrzeug (201) und vor dem Neigungsfahrzeug (101) existiert, so dass der Abstand zwischen dem Motorrad (301) und dem Neigungsfahrzeug (101) in der Fahrzeugbreiterichtung des Neigungsfahrzeugs (101) gleich dem ersten Abstand (L1) ist, und es kein Hindernis außer dem Kraftfahrzeug (201) und dem Motorrad (301) gibt, gibt die FCW-Steuervorrichtung (103) die FCW basierend auf dem Spielraum aus, der basierend auf der Beziehung zwischen dem Kraftfahrzeug (201) und dem Neigungsfahrzeug (101) erfasst wird.

5. Das Neigungsfahrzeug (101) gemäß einem der Ansprüche 1 bis 4, bei dem, während das Neigungsfahrzeug (101) abbiegt, die FCW-Steuervorrichtung (103) konfiguriert ist, die FCW nicht auszugeben, unabhängig davon, ob das Hindernis vorhanden ist.

6. Das Neigungsfahrzeug (101) gemäß einem der Ansprüche 1 bis 5, bei dem, während das Neigungsfahrzeug (101) mit einer Fahrzeuggeschwindigkeit fährt, die gleich wie oder niedriger als eine zweite Fahrzeuggeschwindigkeit ist, die niedriger ist als die erste Fahrzeuggeschwindigkeit, die FCW-Steuervorrichtung (103) konfiguriert ist, die FCW nicht auszugeben, unabhängig davon, ob das Hindernis vorhanden ist.

7. Das Neigungsfahrzeug (101) gemäß einem der Ansprüche 1 bis 6, bei dem die FCW-Steuervorrichtung (103) konfiguriert ist, eine Steuerung durchzuführen, um eine Beziehung 7 herzustellen:
die Beziehung 7: Wenn das Neigungsfahrzeug (101) linear mit der ersten Fahrzeuggeschwindigkeit (V1) fährt und mehrere Motorräder (301) vor dem Neigungsfahrzeug (101) existieren, so dass der Abstand zwischen der linearen Linie (CL), die in der Fahrzeugbreiterichtung des Neigungsfahrzeugs (101) durch die Mitte verläuft und jedem der Motorräder (301) und dem Neigungsfahrzeug (101) in der Fahrzeugbreiterichtung des Neigungsfahrzeugs (101) gleich einem zweiten Abstand ist, der länger als Null und kürzer als eine Hälfte der Fahrzeugbreite des Neigungsfahrzeugs (101) ist, gibt die FCW-Steuervorrichtung (103) die FCW nicht aus, unabhängig von dem Abstand zwischen jedem der mehreren Motorräder (301) und dem Neigungsfahrzeug (101) in der Fahrtrichtung des Neigungsfahrzeugs (101).

8. Das Neigungsfahrzeug (101) gemäß Anspruch 7, bei dem m die FCW-Steuervorrichtung (103) konfiguriert ist, eine Steuerung durchzuführen, um eine Beziehung 8 herzustellen:
die Beziehung 8: Wenn das Neigungsfahrzeug (101) linear mit der ersten Fahrzeuggeschwindigkeit (V1) fährt, mehrere Motorräder (301) vor dem Neigungsfahrzeug (101) existieren, so dass der Abstand zwischen der linearen Linie (CL), die in der Fahrzeugbreiterichtung des Neigungsfahrzeugs (101) durch die Mitte verläuft und jedem der mehreren Motorräder (301) in der Fahrzeugbreiterichtung des Neigungsfahrzeugs (101) gleich dem zweiten Abstand ist, und es kein Hindernis außer den mehreren Motorrädern (301) gibt, gibt die FCW-Steuervorrichtung (103) die FCW nicht aus, unabhängig von dem Abstand zwischen jedem der mehreren Motorräder (301) und dem Neigungsfahrzeug (101) in der Fahrtrichtung des Neigungsfahrzeugs (101).

9. Das Neigungsfahrzeug (101) gemäß Anspruch 7 oder 8, bei dem die FCW-Steuervorrichtung (103) konfiguriert ist, eine Steuerung durchzuführen, um eine Beziehung 9 herzustellen:
die Beziehung 9: Wenn das Neigungsfahrzeug (101) linear mit der ersten Fahrzeuggeschwindigkeit (V1) fährt, ein Kraftfahrzeug (201) auf der linearen Linie (CL) existiert, die in der Fahrzeugbreiterichtung des Neigungsfahrzeugs (101) durch die Mitte verläuft, mehrere Motorräder (301) hinter dem Kraftfahrzeug (201) und vor dem Neigungsfahrzeug (101) existieren, so dass der Abstand zwischen der linearen Linie (CL), die in der Fahrzeugbreiterichtung des Neigungsfahrzeugs (101) durch die Mitte verläuft, und jedem der Motorräder (301) in der Fahrzeugbreiterichtung des Neigungsfahrzeugs (101) gleich dem zweiten Abstand ist, und es kein Hindernis außer dem Kraftfahrzeug (201) und den mehreren Motorrädern (301) gibt, gibt die FCW-Steuervorrichtung (103) die FCW nicht aus, unabhängig von dem Abstand zwischen dem Kraftfahrzeug (201) und dem Neigungsfahrzeug (101) in der Fahrtrichtung des Neigungsfahrzeugs (101).

10. Das Neigungsfahrzeug (101) gemäß einem der Ansprüche 7 bis 9, bei dem die FCW-Steuervorrichtung (103) konfiguriert ist, eine Steuerung durchzuführen, um eine Beziehung 10 herzustellen:
die Beziehung 10: Wenn das Neigungsfahrzeug (101) linear mit der ersten Fahrzeuggeschwindigkeit (V1) fährt, ein Kraftfahrzeug (201) auf der linearen Linie (CL) existiert, die in der Fahrzeugbreiterichtung des Neigungsfahrzeugs (101) durch die Mitte verläuft, ein Motorrad (301) hinter dem Kraftfahrzeug (201) und vor dem Neigungsfahrzeug (101) existiert, so dass der Abstand zwischen der linearen Linie (CL), die in der Fahrzeugbreiterichtung des Neigungsfahrzeugs (101) durch die Mitte verläuft, und dem Motorrad (301) in der Fahrzeugbreiterichtung des Neigungsfahrzeugs (101) gleich dem zweiten Abstand ist, und es kein Hindernis außer dem Kraftfahrzeug (201) und dem Motorrad (301) gibt, gibt die FCW-Steuervorrichtung (103) die FCW basierend auf dem Spielraum aus, der basierend auf der Beziehung zwischen dem Kraftfahrzeug (201) und dem Neigungsfahrzeug (101) erfasst wird.

11. Das Neigungsfahrzeug (101) gemäß einem der Ansprüche 7 bis 9, bei dem die FCW-Steuervorrichtung (103) konfiguriert ist, eine Steuerung durchzuführen, um eine Beziehung 11 herzustellen:
die Beziehung 11: Wenn das Neigungsfahrzeug (101) linear mit der ersten Fahrzeuggeschwindigkeit (V1) fährt, ein Kraftfahrzeug (201) auf der linearen Linie (CL) existiert, die in der Fahrzeugbreiterichtung des Neigungsfahrzeugs (101) durch die Mitte verläuft, ein Motorrad (301) hinter dem Kraftfahrzeug (201) und vor dem Neigungsfahrzeug (101) existiert, so dass der Abstand zwischen der linearen Linie (CL), die in der Fahrzeugbreiterichtung des Neigungsfahrzeugs (101) durch die Mitte verläuft, und dem Motorrad (301) in der Fahrzeugbreiterichtung des Neigungsfahrzeugs (101) gleich dem zweiten Abstand ist, und es kein Hindernis außer dem Kraftfahrzeug (201) und dem Motorrad (301) gibt, gibt die FCW-Steuervorrichtung (103) die FCW nicht aus, unabhängig von dem Abstand zwischen dem Kraftfahrzeug (201) und dem Neigungsfahrzeug (101) in der Fahrtrichtung des Neigungsfahrzeugs (101).

## Revendications

1. Véhicule à inclinaison (101) comportant un dispositif de commande d'Avertissement de Collision en Avant, FCW, (103) qui est monté sur un châssis de carrosserie de véhicule à inclinaison qui s'incline vers la droite dans une direction gauche-droite du véhicule lors d'un virage à droite et qui s'incline vers la gauche dans la direction gauche-droite du véhicule lors d'un virage à gauche, le dispositif de commande de FCW (103) étant configuré pour sortir un FCW sur base d'une marge acquise sur base d'un rapport entre un obstacle et le véhicule à inclinaison (101),
la marge acquise sur base du rapport entre un obstacle (201) et le véhicule à inclinaison (101) est une marge lorsqu'un conducteur fait face à l'obstacle,
le véhicule à inclinaison (101) comprenant au moins un capteur avant configuré pour détecter un objet devant le véhicule à inclinaison (101) ou un appareil de communication de véhicule à véhicule configuré pour recevoir, d'un autre véhicule, un signal relatif aux informations de localisation de l'autre véhicule,
le dispositif de commande de FCW (103) étant configuré pour acquérir la marge sur base du rapport entre l'obstacle (201) et le véhicule à inclinaison (101), en référence aux informations acquises par au moins l'un parmi le capteur avant ou l'appareil de communication de véhicule à véhicule,
le dispositif de commande de FCW (103) étant configuré pour effectuer une commande pour établir un rapport 1, et au moins l'un parmi un rapport 2 ou un rapport 3:
le rapport 1: lorsque le véhicule à inclinaison (101) circule de manière linéaire à une première vitesse de véhicule (V1), qu'une automobile (201) existe devant le véhicule à inclinaison (101) et est située sur une ligne linéaire (CL) passant par le centre dans une direction de la largeur de véhicule du véhicule à inclinaison (101), et qu'il n'y a aucun obstacle à l'exception de l'automobile (201), le dispositif de commande de FCW (103) sort le FCW sur base de la marge acquise sur base du rapport entre l'automobile (201) et le véhicule à inclinaison (101);
le rapport 2: lorsque le véhicule à inclinaison (101) circule de manière linéaire à la première vitesse de véhicule (V1) et qu'une motocyclette (301) existe devant le véhicule à inclinaison (101) et est située sur la ligne linéaire (CL) passant par le centre dans la direction de la largeur de véhicule du véhicule à inclinaison (101), le dispositif de commande de FCW (103) ne sort pas le FCW, quelle que soit la distance entre la motocyclette (301) et le véhicule à inclinaison (101) dans la direction de circulation du véhicule à inclinaison (101); et
le rapport 3: lorsque le véhicule à inclinaison (101) circule de manière linéaire à la première vitesse de véhicule (V1) et que plusieurs motocyclettes (301) existent devant le véhicule à inclinaison (101), de sorte que la distance entre chacune des plusieurs motocyclettes (301) et le véhicule à inclinaison (101) dans la direction de la largeur de véhicule du véhicule à inclinaison (101) est égale à une première distance (L1) qui est plus longue que zéro et plus courte que la moitié de la largeur du véhicule à inclinaison (101), le dispositif de commande de FCW (103) ne sort pas le FCW, quelle que soit la distance entre chacune des plusieurs motocyclettes (301) et le véhicule à inclinaison (101) dans la direction de circulation du véhicule à inclinaison (101).

2. Véhicule à inclinaison (101) selon la revendication 1, dans lequel le dispositif de commande de FCW (103) est configuré pour effectuer une commande pour établir le rapport 3 et un rapport 4:
le rapport 4: lorsque le véhicule à inclinaison (101) circule de manière linéaire à la première vitesse de véhicule (V1), que plusieurs motocyclettes (301) existent devant le véhicule à inclinaison (101), de sorte que la distance entre chacune des plusieurs motocyclettes (301) et le véhicule à inclinaison (101) dans la direction de la largeur de véhicule du véhicule à inclinaison (101) est égale à la première distance (L1), et qu'il n'y a aucun obstacle à l'exception des plusieurs motocyclettes (301), le dispositif de commande de FCW (103) ne sort pas 1e FCW, quelle que soit la distance entre chacune des plusieurs motocyclettes (301) et le véhicule à inclinaison (101) dans la direction de circulation du véhicule à inclinaison (101).

3. Véhicule à inclinaison (101) selon la revendication 1 ou 2, dans lequel le dispositif de commande de FCW (103) est configuré pour effectuer une commande pour établir le rapport 3 et un rapport 5:
le rapport 5: lorsque le véhicule à inclinaison (101) circule de manière linéaire à la première vitesse de véhicule (V1), qu'une automobile (201) existe sur la ligne linéaire (CL) passant par le centre dans la direction de la largeur de véhicule du véhicule à inclinaison (101), que plusieurs motocyclettes (301) existent derrière l'automobile (201) et devant le véhicule à inclinaison (101), de sorte que la distance entre chacune des plusieurs motocyclettes (301) et le véhicule à inclinaison (101) dans la direction de la largeur de véhicule du véhicule à inclinaison (101) est égale à la première distance (L1), et qu'il n'y a aucun obstacle à l'exception de l'automobile (201) et des plusieurs motocyclettes (301), le dispositif de commande de FCW (103) ne sort pas le FCW, quelle que soit la distance entre le l'automobile (201) et le véhicule à inclinaison (101) dans la direction de circulation du véhicule à inclinaison (101).

4. Véhicule à inclinaison (101) selon l'une quelconque des revendications 1 à 3,
dans lequel le dispositif de commande de FCW (103) est configuré pour effectuer une commande pour établir le rapport 3 et un rapport 6:
le rapport 6: lorsque le véhicule à inclinaison (101) circule de manière linéaire à la première vitesse de véhicule (V1), qu'une automobile (201) existe sur la ligne linéaire (CL) qui passe par le centre dans la direction de la largeur de véhicule du véhicule à inclinaison (101), qu'une motocyclette (301) existe derrière l'automobile (201) et devant le véhicule à inclinaison (101), de sorte que la distance entre la motocyclette (301) et le véhicule à inclinaison (101) dans la direction de la largeur de véhicule du véhicule à inclinaison (101) est égale à la première distance (L1), et qu'il n'y a aucun obstacle à l'exception de l'automobile (201) et de la motocyclette (301), le dispositif de commande de FCW (103) sort le FCW sur base de la marge acquise sur base du rapport entre l'automobile (201) et le véhicule à inclinaison (101).

5. Véhicule à inclinaison (101) selon l'une quelconque des revendications 1 à 4, dans lequel, tandis que le véhicule à inclinaison (101) tourne, le dispositif de commande de FCW (103) est configuré pour ne pas sortir le FCW, sans importer qu'il y ait ou non l'obstacle.

6. Véhicule à inclinaison (101) selon l'une quelconque des revendications 1 à 5, dans lequel, tandis que le véhicule à inclinaison (101) circule à une vitesse de véhicule égale ou inférieure à une deuxième vitesse de véhicule qui est inférieure à la première vitesse de véhicule (V1), le dispositif de commande de FCW (103) est configuré pour ne pas sortir le FCW, sans importer qu'il y ait ou non un obstacle.

7. Véhicule à inclinaison (101) selon l'une quelconque des revendications 1 à 6, dans lequel le dispositif de commande de FCW (103) est configuré pour effectuer une commande pour établir un rapport 7:
le rapport 7: lorsque le véhicule à inclinaison (101) circule de manière linéaire à la première vitesse de véhicule (V1) et que plusieurs motocyclettes (301) existent devant le véhicule à inclinaison (101), de sorte que la distance entre la ligne linéaire (CL) passant par le centre dans la direction de la largeur de véhicule du véhicule à inclinaison (101) et chacune des motocyclettes (301) dans la direction de la largeur de véhicule du véhicule à inclinaison (101) est égale à une deuxième distance qui est plus longue que zéro et plus courte que la moitié de la largeur de véhicule du véhicule à inclinaison (101), le dispositif de commande de FCW (103) ne sort pas le FCW, quelle que soit la distance entre chacune des plusieurs motocyclettes (301) et le véhicule à inclinaison (101) dans la direction de circulation du véhicule à inclinaison (101).

8. Véhicule à inclinaison (101) selon la revendication 7, dans lequel le dispositif de commande de FCW (103) est configuré pour effectuer une commande pour établir un rapport 8:
le rapport 8: lorsque le véhicule à inclinaison (101) circule de manière linéaire à la première vitesse de véhicule (V1), que plusieurs motocyclettes (301) existent devant le véhicule à inclinaison (101), de sorte que la distance entre la ligne linéaire (CL) passant par le centre dans la direction de la largeur de véhicule du véhicule à inclinaison (101) et chacune des plusieurs motocyclettes (301) dans la direction de la largeur de véhicule du véhicule à inclinaison (101) est égale à la deuxième distance, et qu'il n'y a aucun obstacle à l'exception de la pluralité de motocyclettes (301), le dispositif de commande de FCW (103) ne sort pas le FCW, quelle que soit la distance entre chacune des plusieurs motocyclettes (301) et le véhicule à inclinaison (101) dans la direction de circulation du véhicule à inclinaison (101).

9. Véhicule à inclinaison (101) selon la revendication 7 ou 8, dans lequel le dispositif de commande de FCW (103) est configuré pour effectuer une commande pour établir un rapport 9:
le rapport 9: lorsque le véhicule à inclinaison (101) circule de manière linéaire à la première vitesse de véhicule (V1), qu'une automobile (201) existe sur la ligne linéaire (CL) passant par le centre dans la direction de la largeur de véhicule du véhicule à inclinaison (101), que plusieurs motocyclettes (301) existent derrière l'automobile (201) et devant le véhicule à inclinaison (101), de sorte que la distance entre la ligne linéaire (CL) passant par le centre dans la direction de la largeur de véhicule du véhicule à inclinaison (101) et chacune des motocyclettes (301) dans la direction de la largeur de véhicule du véhicule à inclinaison (101) est égale à la deuxième distance, et qu'il n'y a aucun obstacle à l'exception de l'automobile (201) et de la pluralité de motocyclettes (301), le dispositif de commande de FCW (103) ne sort pas le FCW, quelle que soit la distance entre l'automobile (201) et le véhicule à inclinaison (101) dans la direction de circulation du véhicule à inclinaison (101).

10. Véhicule à inclinaison (101) selon l'une quelconque des revendications 7 à 9, dans lequel le dispositif de commande de FCW (103) est configuré pour effectuer une commande pour établir un rapport 10:
le rapport 10: lorsque le véhicule à inclinaison (101) circule de manière linéaire à la première vitesse de véhicule (V1), qu'une automobile (201) existe sur la ligne linéaire (CL) qui passe par le centre dans la direction de la largeur de véhicule du véhicule à inclinaison (101), qu'une motocyclette (301) existe derrière l'automobile (201) et devant le véhicule à inclinaison (101), de sorte que la distance entre la ligne linéaire (CL) passant par le centre dans la direction de la largeur de véhicule du véhicule à inclinaison (101) et la motocyclette (301) dans la direction de la largeur de véhicule du véhicule à inclinaison (101) est égale à la deuxième distance, et qu'il n'y a aucun obstacle à l'exception de l'automobile (201) et de la motocyclette (301), le dispositif de commande de FCW (103) sort le FCW sur base de la marge acquise sur base du rapport entre l'automobile (201) et le véhicule à inclinaison (101).

11. Véhicule à inclinaison (101) selon l'une quelconque des revendications 7 à 9, dans lequel le dispositif de commande de FCW (103) est configuré pour effectuer une commande pour établir un rapport 11:
le rapport 11: lorsque le véhicule à inclinaison (101) circule de manière linéaire à la première vitesse de véhicule (V1), qu'une automobile (201) existe sur la ligne linéaire (CL) passant par le centre dans la direction de la largeur de véhicule du véhicule à inclinaison (101), qu'une motocyclette (301) existe derrière l'automobile (201) et devant le véhicule à inclinaison (101), de sorte que la distance entre la ligne linéaire (CL) passant par le centre dans la direction de la largeur de véhicule du véhicule à inclinaison (101) et la motocyclette (301) dans la direction de la largeur de véhicule du véhicule à inclinaison (101) est égale à la deuxième distance, et qu'il n'y a aucun obstacle à l'exception de l'automobile (201) et de la motocyclette (301), le dispositif de commande de FCW (103) ne sort pas le FCW, quelle que soit la distance entre l'automobile (201) et le véhicule à inclinaison (101) dans la direction de circulation du véhicule à inclinaison (101).
